Europäisches Patentamt

European Patent Office

Office européen des brevets

(11) Publication number: **0 373 910**
**A1**

## EUROPEAN PATENT APPLICATION

(21) Application number: 89313016.1

(22) Date of filing: 13.12.89

(51) Int. Cl.⁵: **B23K 37/04, B25B 5/10**

(30) Priority: 13.12.88 GB 8829029

(43) Date of publication of application:
20.06.90 Bulletin 90/25

(84) Designated Contracting States:
BE DE FR GB

(71) Applicant: **CARVER & CO. (ENGINEERS) LIMITED**
**Coppice Side Industrial Estate**
**Walsall West Midlands WS8 7ES(GB)**

(72) Inventor: **Cook, Robert Alan**
**14 Clarence Street**
**Heyside, Royton OL2 6 LR(GB)**

(74) Representative: **Parker, Nigel Edward et al**
**H.N. & W.S. Skerrett Charles House 148/9**
**Great Charles Street**
**Birmingham B3 2HT(GB)**

(54) **Improvements in or relating to clamps and a method of securing parts in correct relative alignment to one another.**

(57) A clamp C has a handle 5 and an arm 7 pivotally mounted on axis 6. Arm 7 carries a pressure block 11 and is operated by a screw-threaded bolt 12 which passes through a cylindrical block 10 mounted at the end of the arm 7 remote from block 11. Bolt 12 seats in socket 14 in base 3 a of L-shaped body 3 of the clamp C. In use, clamp C is welded to a metal plate 1 which is to be joined to a metal plate 2. Clamp C has a replaceable pad 4 welded to plate 1 and arm 7 is operated by screw 12 to move block 11 to engage and align plate 2 relative to plate 1 prior to a butt welding operation.

FIG.1.

# IMPROVEMENTS IN OR RELATING TO CLAMPS AND A METHOD OF SECURING PARTS IN CORRECT RELATIVE ALIGNMENT TO ONE ANOTHER

This invention relates to improvements in or relating to clamps and to a method of securing parts in correct relative alignment to one another, for example prior to and during a welding operation being performed on the parts.

There tend to be problems in the correct relative positioning or alignment of parts which are to be joined together, for example by welding. Problems also tend to exist where parts are joined to one another, for example by welding such that after said joining one or more of the parts has moved out of alignment or, for example has become buckled owing to the joining process itself. For example, it is known to join metal sheets to one another in a common plane by butt welding. The sheets are joined together by tack welds and often one or other of the sheets becomes buckled or distorted in various places along the join. In order to bring the two sheets into correct relative alignment the sheets may quite simply be hammered into place, such process being somewhat crude, inconvenient and inaccurate and altogether unsatisfactory. Further difficulties arise in relation to the correct positioning of parts prior to being joined together, for example by welding or indeed by bonding. These problems do not exist only in relation to metal components but also for example in relation to plastics components. Previous Patent Application No. GB8829029 (now assigned to the present Applicant) outlines some of the problems involved in the correct relative positioning of components prior to being joined together and, accordingly the entire content of Patent Application No. GB8829029 is hereby incorporated into the present application by reference.

It is an object of the present invention to provide a clamp which is improved in at least some respect or to provide a method of securing parts together using a clamp, which method is improved in at least some respect, or to provide a clamp or method of securing parts together which at least alleviates one or more, of the aforementioned problems or other problems.

According to one aspect of the present invention there is provided a method of securing parts to one another in correct relative alignment or positioning, said method comprising:

(a) attaching two parts to one another by a welding or bonding process,

(b) temporarily securing at least one clamp, for example by welding or bonding, to one of said parts and operating said at least one clamp either to hold said two parts in correct relative alignment or positioning to one another prior to any operation being carried out to join the two parts together (for example a welding or bonding process) or to bringing said two parts into relative alignment or positioning to one another after at least a partial securing process has been effected between said parts,

(c) removing said at least one clamp from said part to which it is attached when said parts are correctly aligned relative to one another and at least partially secured thereto.

Where the parts to be joined together are metal the clamp or clamps will usually be welded to the metal, these welds being broken to remove the clamp/s at an appropriate stage in the process of securing the two parts to one another.

It is conceivable that the clamp/s could alternatively be bonded in place by an appropriate adhesive and, indeed, plastics parts rather than metal parts may be joined together. It is possible that at least one clamp could be secured to its associated part by different means, for example by separate fastening means such as a nut or bolt passing through the part to which it is joined. However, it is envisaged that the attachment of the clamp to said part by separate fastening means will not be usual and indeed if the separate fastening means were required to pass through said part this would only be feasible where the holes in said part would not adversely affect the performance of the final product.

In one embodiment of the method of the present invention, the parts to be secured together are of sheet metal form and the two sheet metal parts may be butt welded together by tack welds. Should one or other of the sheet metal parts buckle or distort one or more clamps may be welded to at least one of the sheets on one side of the butt welded joint. The clamp/s may then be operated individually, for example sequentially where a plurality of clamps is provided, or possibly operated in unison to bring a pressure to bear on the part to which it is not welded, said pressure being applied sufficiently until the buckling or distortion is straightened out so that the two sheet metal plates are correctly aligned relative to one another. The gaps between the tack welds can then be filled in before or after removal of the clamp or clamps. Usually, the clamp or clamps will be welded to the plate which appears to be the slightly lower of the two, pressure being exerted on the upper distorted/buckled plate by the clamp/s.

Preferably, said method of securing parts to one another involves providing the clamp or clamps with a replaceable interchangeable pad which can be welded or bonded to one of the parts to be joined together, since frequent breaking of welds (or indeed bonds) of the clamp to parts to be joined together can cause damage to the pad and thus cause an inconvenience in the method of securing said parts to one another. The method may be applicable to securing sheet parts to one another or pipes to one another or indeed to any parts which are required to be correctly relatively aligned or positioned to one another in a secure welded or bonded relationship.

Further advantageous method features will be apparent from the following description and drawings although it is pointed out that the operation of the clamp could be by mechanical, hydraulic or pneumatic means or any combination of same and could be electrically, electronically and/or computer controlled in operation. However, where metal parts are to be welded to one another and the clamp/s is/are to be welded to one of the metal parts it is envisaged that normally the clamp will be produced in a relatively simple and cost effective manner and involving purely a mechanical action to bring pressure to bear at the appropriate place on the part to which it is not attached. Clearly, since the weld of the clamp is to be broken at some stage during the process the clamp needs to be of a robust sturdy nature and a purely mechanical action seems best suited to meet these requirements.

Further according to the present invention there is provided a clamp for use in the correct relative alignment or positioning of parts which are secured or which are to be secured, to one another, said clamp being adapted for attachment to one of said parts to be joined together, for example by means of welding or bonding, said clamp being provided with a base attachable to, preferably by welding or bonding, one of said parts, said base preferably being provided with an interchangeable pad for attachment to said one of the parts.

The clamp may be mechanical, pneumatic and/or hydraulically actuated and may be operated by a simple screw action to bring pressure to bear on the part to which the clamp is not attached above, at or below the level of the base of the clamp.

The clamp may be provided with a pad for attachment to a workable or machine bed.

The clamp is, preferably, provided with a handle to help in positioning the clamp prior to attachment to said one of the parts and to help in breaking the bond or weld (where provided) on removal of the clamp.

Many other advantageous features of the clamp will be apparent from the following description and drawings.

A clamp and method of securing parts to one another in correct relative positioning and alignment in accordance with the present invention, will now be described by way of example only, with reference to the simplified, diagrammatic, accompanying drawings, in which:

FIGURE 1 shows a side view of the clamp attached to a first sheet metal part and utilised for bringing a second sheet metal part into alignment with said first sheet metal part;7

FIGURE 2 shows a sectional view taken on line II-II of FIGURE 1;

FIGURE 3 illustrates the clamp used for aligning curved metal sheets;

FIGURE 4 shows the clamp attached to a sheet to which a body is to be secured thereto;

FIGURE 5 shows the clamp used to join two metal sheets together at right angles;

FIGURE 6 shows the use of a clamp to position two metal sheet components at right angles by a modified method;

FIGURE 7 illustrates the use of the clamp in the lining of a vessel with a sheet lining;

FIGURE 8 shows a replacement foot or pad for the clamp to permit the clamp to be attached to a work table or machine bed, and

FIGURE 9 shows the use of three clamps positioned equiangularly about a pipe which is to be aligned co-axially with another pipe prior to welding the two pipes together.

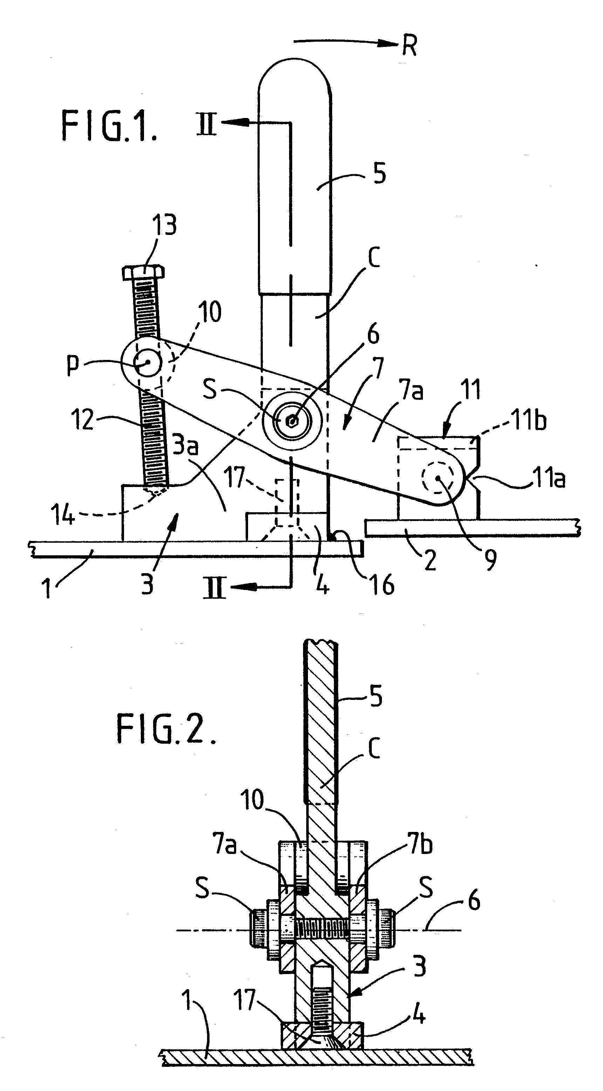

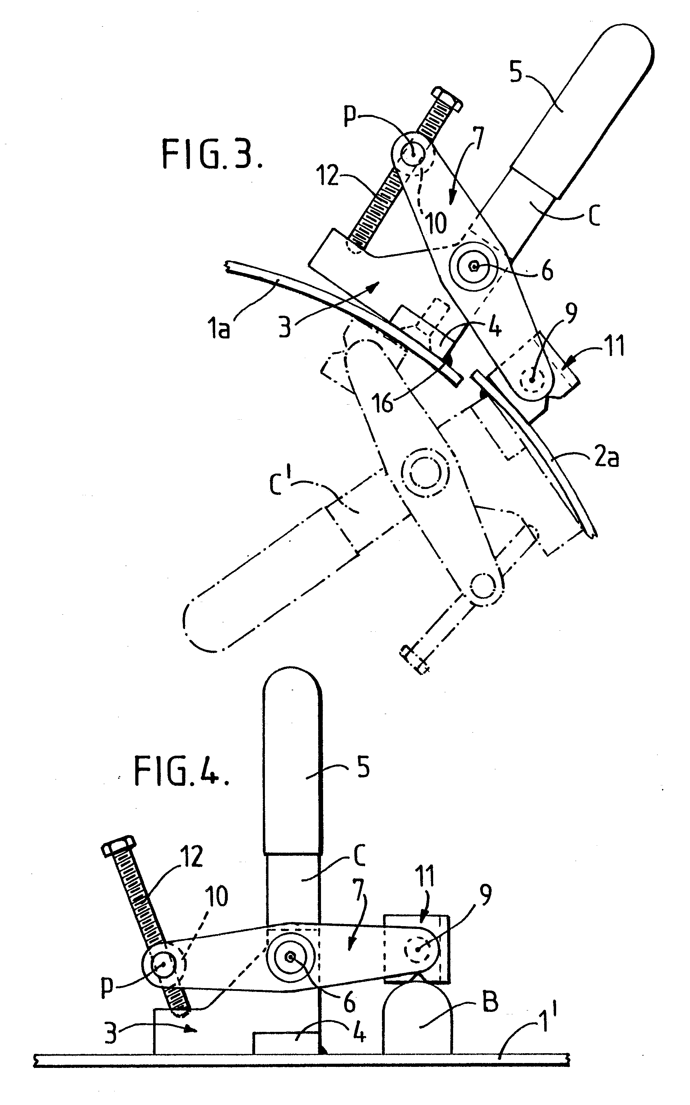

FIGURE 1 shows a basic version of a clamp C in accordance with the present invention. The clamp C comprises a generally L-shaped body 3 and a generally rectangular pad or foot 4 is detachably mounted on the base 3a of the L-shaped body 3 as shown in FIGURE 1 (see FIGURE 2 also). In this instance, the pad 4 is welded to one flat metal sheet 1 as shown and a second metal sheet 2 is to be correctly positioned by the clamp C prior to welding. The vertical limb of the body 3 terminates in an electrically insulated handle 5 below which is an arm 7 pivotally mounted about an axis 6. The insulated handle 5 may provide some measure of heat insulation and at least provides a suitable hand grip since the handle will usually be held to steady the clamp whilst the pad is welded to the metal sheet 1. The connection of the arm 7 should be evident from FIGURES 1 and 2, said arm having two side plates or members 7a,7b of identical form positioned on either side of the body 3. The pivotal axis 6 passes through the centre of the two side plates 7a,7b such that the arm 7 can extend symmetrically by equal amounts fore and aft of the clamp body 3 (see FIGURE 4). A cylindrical block 10 is connected between the two side plates 7a,7b by a pivot pin p located at one end (left hand end as shown in FIGURE 1) of the arm 7 and passing through appropriately aligned holes in the side plates and cylindrical block. At the opposite end of the arm 7 a pressure block 11 of generally square form is mounted in between the side plates 7a and 7b. The cylindrical block 10 is pivotable about the axis of the pin p and moves with that pin. The block 11 is pivotable about axis 9. The cylindrical block 10 has a transverse tapped hole which receives the screw threaded shank of a bolt 12. The bolt 12 has a hexagonal head 13 and the lower end of the bolt beds in a socket 14 in the upper surface of the base 3a. Appropriate rotation of the bolt 12 in the socket 14 will cause a raising or lowering of the end of the arm 7 which receives block 11.

As shown in FIGURES 1 and 2 the clamp body 3 is positioned on a metal sheet 1 (by welding although this could be by bonding) with the pad or foot 4 adjacent the joint to be welded. The weld is along one side of the pad 4, adjacent the join in the sheets 1 and 2 and is shown at 16. Usually, the weld (or bond where applicable) will be provided along one side (bottom edge) only of the pad or otherwise it will be too difficult to break the weld (bond). However, in some instances the side which is welded (bonded) will be at right angles to the front of the pad. The arm 7 overlaps the metal sheet 2 and the bolt 12 is rotated to lower the righthand end of the arm and block 11 into contact with the sheet 2 to move the sheets 1 and 2 into alignment until the edges of the sheets are held in abutting relationship (not shown) for welding. After the welding operation has been performed, bolt 12 is rotated in a reverse sense to lift the pressure block 11 clear of the plate 2 and to permit the clamp body to be removed from the plate 1 by breaking the weld 16. Advantageously, the righthand end of arm 7 may be moved upwards sufficiently to allow rotation of the clamp C, by the handle in the direction of the arrow R to break the weld 16. The handle may be hit with a hammer in the direction of arrow R to break the weld. The insulation on the handle may protect it from a blow by the hammer. The pad can be rotated by slackening the screw fastener 17 to present a fresh side of the pad for welding to a new part. Repeated removal of the pad 4 from metal parts to be welded to one another can cause damage to the pad 4. If this occurs it is a simple matter to remove the pad by undoing the screw fastener 17 and attaching a new one in position. It is a main feature of the present invention that the material of the pad can be chosen to suit or be compatible with the material of the part to which it is attached (by welding or bonding). The pad would be aluminium where it is to be attached to an aluminium part or steel where it is to be attached to a steel part. The clamp C could be used with plastic sheets in which the pad is a plastics pad welded or glued to one of the plastic sheets. The clamp C may be utilised with any number of other clamps similarly attached to the sheet 1 or indeed attached to the sheet 2.

The design of the clamp C is important in that the pivot axis 6 is arranged relatively low down on the clamp and the arm member 7 is relatively long. In this way the clamp is adapted to seemingly maximise mechanical advantage and ease of operation so that a pressure can conveniently be applied by the arm member 7 down to at least the lower level of the base 3a of the clamp. Once again the size of the pressure block 11 is relatively large in order to be able to exert a pressure over a reasonable area. The block has a V-cut 11a along one edge thereof to facilitate engagement with a part unsuitable for engagement by a flat surface (see for example FIGURE 4), which part is to be secured and aligned in respect to the part to which the clamp is joined. Additionally, the block 11 may be provided with a further V-shaped groove 11b running perpendicularly to groove 11a. The block 11 may be provided with additional or alternative suitably shaped gripping or engagement surfaces.

Additionally, it is important in many applications that the clamp C is provided with a handle so that it can be gripped while the clamp is actuated and/or during removal of the clamp from the part to which it is attached. The handle allows a good leverage for breaking the weld 16, which weld is advantageously, located at the apex of the angle of the body 3.

The assembly of the clamp is, advantageously, simple and is such that the side plates 7a,7b of the arm member 7 can be removed quite easily by removal of the central locking screws S to enable, for example, arm member 7 to be replaced with a differently sized or shaped arm member for different applications or for the replacement of block 11 with a differently shaped block more suited for the task in hand.

The clamp C could be provided with one or more limit stops to limit the angular movement of arm 7 in clockwise and/or anti-clockwise rotation.

A particularly important instance of use of the clamp is in the straightening out of two parts (for example metal sheets) which have been attached together and which have been buckled or distorted by the joining process. For example in butt welding metal sheets together using tack welds often one or other of the plates becomes buckled and in order to straighten the plates out and align them correctly usually they have to be hammered flat. If a row of clamps as shown in FIGURE 1 is now attached to one of the metal sheets adjacent the join (for example by welding) screw 12 can be actuated to bring block 11 downwardly onto the upwardly buckled sheet in order to straighten out the buckle, with the other clamps being actuated in similar manner to straighten out other buckled parts while the gaps between the tack welds are filled in. Thus the clamp can be used to straighten out two parts which have previously been attached to one another and not used merely to align two parts together whilst they are welded or bonded. In this instance of use, the clamp is a "levelling" clamp but it could be used to bring parts together in any desired relative orientation with respect to one another.

FIGURE 3 shows the clamp C utilised to position curved metal sheets correctly relative to one another. Once again the clamp C is joined to one of the curved sheets 1a adjacent the join, for example by welding whilst the other sheet 2a is brought into relative alignment therewith by the block 11. Additionally or alternatively the, or a, clamp C could be positioned on the inside of the curvature of the plates as shown in chain-dotted lines rather than being fixed on the outside curvature as shown.

FIGURE 4 illustrates use of the clamp C for joining a body B onto a metal sheet 1′, said body being located by the pressure block 11. The weld 16 could be replaced by a weld (not shown) along a side of the pad which is at right angles thereto to allow easier removal of the clamp by a side blow on the handle generally at right angles to arrow R (see FIGURE 1).

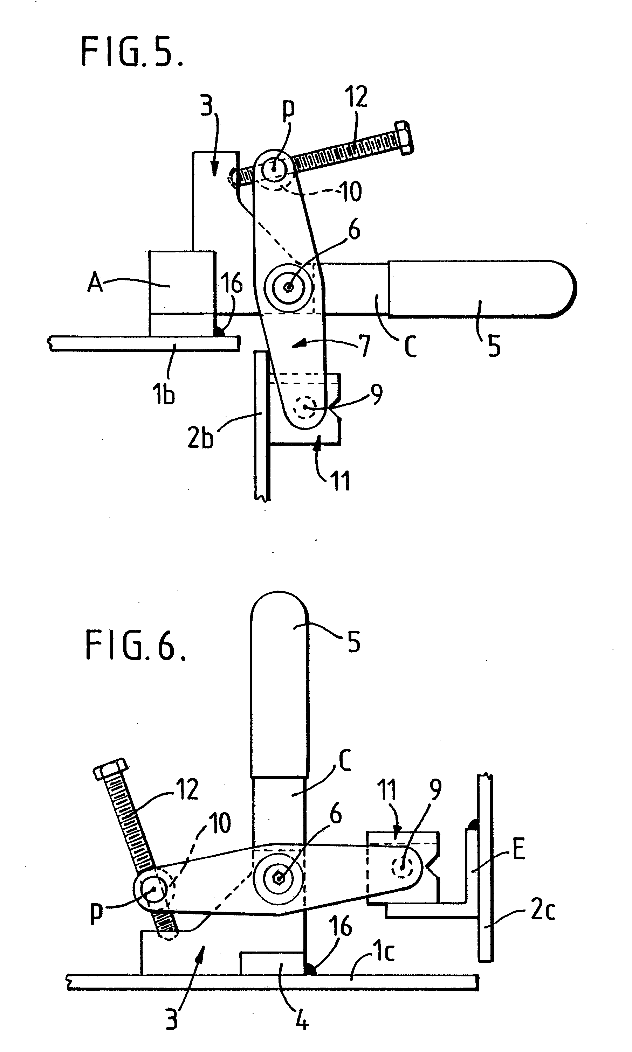

FIGURE 5 shows the use of an adapter block A to enable the handle 5 to extend parallel to a metal plate 1b so that the clamp C is arranged through 90° relative to the metal plate when compared with the arrangement shown in FIGURE 1, thereby permitting the pressure block 11 to apply pressure to a plate 1b in order to join the two plates 1b and 2b at right angles to one another. The clamp C is positioned externally of the joining angle and of course the adapter block A could be modified so that the plates could be joined together at an angle other than 90°. The adapter block A could be replaced by pad 4 welded to a piece of angle iron along one side of the pad in a manner which should be readily envisaged.

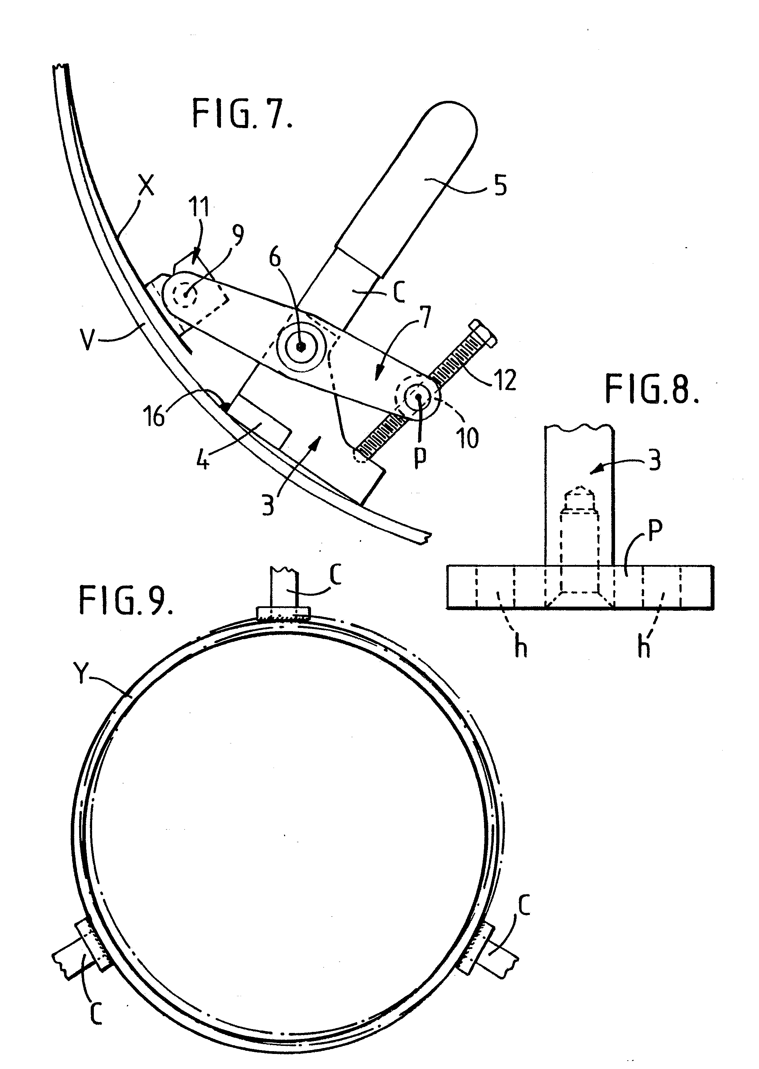

FIGURE 6 shows a different way of joining together two plates 1c and 2c at right angles, this time using an adapter angle element e, welded to plate 2c. In this way the clamp C is positioned internally of the angle and does not have to be rotated through 90° relative to the plate to which it is attached by welding or bonding.

FIGURE 7 illustrates the use of the clamp C in the lining of a vessel v with a sheet lining X where seams of the lining are required to be welded to the vessel giving seemingly the maximum contact of lining and vessel.

FIGURE 8 illustrates a pad or foot p which is interchangeable with the pad 4 on the clamp C, said pad p is attachable to vertical limb of body 3 of clamp C (as shown cut away) and is of a suitable shape to allow attachment of the clamp to a machine bed by bolts (not shown) being passed through holes h in a manner which should be evident from FIGURE 8.

FIGURE 9 illustrates the use of a plurality (in this case three) clamps C which are attached, by welding or bonding equiangularly about a pipe Y in order to bring a second pipe (illustrated by chain dotted lines) into coaxial alignment therewith prior to joining the two pipes together. If desired clamps C could be welded to both of the pipes rather than to one pipe.

It is to be understood tha the scope of the present invention is not to be unduly limited by the particular choice of terminology and that a specific term may be replaced or supplemented by any equivalent or generic term where sensible. Further it is to be understood that individual features, method or features related to the clamp or combinations thereof might be individually patentably inventive. In this connection the terms "welded" and "bonded" are to be given their broadest meanings where applicable. The action of the clamp could be a non-pivoting, for example a reciprocating, action.

**Claims**

1. A method of securing parts to one another in correct relative alignment or positioning, said method comprising:

(a) attaching two parts to one another by a welding or bonding process,

(b) temporarily securing at least one clamp, for example by welding or bonding, to one of said parts and operating said at least one clamp either to hold said two parts in correct relative alignment or positioning to one another prior to any operation being carried out to join the two parts together (for example a welding or bonding process) or to bring said two parts into correct relative alignment or positioning to one another after at least a partial securing process has been effected between said parts,

(c) removing said at least one clamp from said part to which it is attached when said parts are correctly aligned relative to one another and at least partially secured thereto.

2. A method as claimed in Claim 1 in which the parts to be joined together are metal, the clamp or clamps being welded to the metal, these weld/s being broken to remove the clamp/s, and possibly in which the parts to be secured together are of sheet metal form and are butt welded together by tack welds, and preferably in which said one or more clamps are welded to at least one of the sheets on one side of the butt welded joint, and preferably in which the clamp/s is/are operated to bring a pressure to bear on the other sheet, said pressure being applied sufficiently until buckling or distortion is straightened out so that the metal sheets are correctly aligned relative to one another and preferably in which gaps between the tack welds are filled in.

3. A method as claimed in Claim 1 in which the clamp/s is/are bonded in place by an adhesive, and/or in which said parts to be joined together are of plastics, and/or in which the clamp/s is/are secured to the associated part/s by separate fastening means.

4. A method as claimed in any one of the preceding claims in which said at least one clamp has a replaceable pad, which is, preferably welded or bonded to said part along one edge thereof, said edge being adjacent to the joint between said parts.

5. A method as claimed in Claim 1 in which said parts are pipes or curved sheets, and preferably in which three clamps are positioned around the circumference of the pipe and operated to bring another pipe in co-axial alignment therewith prior to securement of the two pipes together, or in which the parts are plates to be joined at an angle to one another, e.g. a right angle, and possibly in which the clamp/s is/are positioned externally of the joint preferably including a pad which is attachable to one of said plates with a base of the clamp orientated at 90° to the said plates, or in which the clamp/s is/are positioned internally of the joint and an angle section is secured to one of said plates.

6. A clamp for use in the correct relative alignment or positioning of parts which are secured, or which are to be secured, to one another, said clamp being adapted for attachment to one of said parts to be joined together, for example by means of welding or bonding, said clamp being provided with a base attachable to, preferably by welding or bonding, one of said parts, said base preferably being provided with an interchangeable pad for attachment to said one of the parts, and possibly in which the clamp is mechanical, pneumatic and/or hydraulically actuated but preferably in which the clamp is operated by a simple screw action to bring pressure to bear on the part to which the clamp is not attached above, at or below the level of the base of the clamp.

7. A clamp as claimed in Claim 6 in which the pad can be attached to said part along one edge thereof and is rotatable, when not so attached, to provide a new attachment edge or edges and preferably in which the clamp is provided with a pad for attachment to a worktable or machine bed, and preferably said clamp having a handle to help in positioning the clamp prior to attachment to said one of the parts and to help in breaking the bond or weld (where provided) on removal of the clamp, said clamp preferably having a pivoting arm operable by a screw action.

8. A clamp as claimed in Claim 6 or 7 having a screw at one end of said arm which seats in the base in the clamp, and a pressure block at the opposite end of the arm, said arm preferably, comprising two side plates embracing the pressure block, the pivot axis of the arm passing through the centre thereof and said arm extending symmetrically on either side of a, or the, handle.

9. A clamp for use in metal fabrication involving the correct positioning of two metal components for welding, comprising a body adapted for welded connection to one of said components on an edge of the body adjacent the other of said components, a pressure arm pivotally mounted on said body for overlapping pressing contact with the other component, and drive means for driving said pressure arm in the direction towards said edge thereby exerting a positioning force on said components while preventing tilting of the clamp body about said edge, whereby after welding of the components withdrawal of the pressure arm permits tilting of the clamp body about said edge for easy breaking of the welded connection.

10. A method of metal fabrication involving the correct positioning of two metal components for welding, wherein a clamp is welded to one of said components on an edge of the clamp body adjacent the other of said components, a pressure arm pivotally mounted on the clamp body being arranged in overlapping pressing contact with the other component, exerting a force on said pressure arm so as to move it in the direction towards said edge thereby exerting a positioning force on said components while preventing tilting of the clamp body about said edge, welding the so positioned components together and then withdrawing the pressure arm and tilting the clamp body about said edge for easy breaking of the welded connection.

FIG.1.

FIG.2.

FIG.3.

FIG.4.

# FIG.5.

# FIG.6.

FIG. 7.

FIG. 8.

FIG. 9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4513955 (DAUBON) * column 2, line 1 - column 7, line 30; figures 1-5A * | 1, 2 | B23K37/04 B25B5/10 |
| A | | 5, 6, 8 | |
| X | US-A-3556508 (VARGA) * column 1, line 28 - column 4, line 17; figures 1-3 * | 1, 2 | |
| A | | 5, 6, 8 | |
| X | US-A-4717131 (DUGAS) * column 1, line 33 - column 8, line 11; figures 1, 9 * | 1 | |
| A | | 2, 3, 6, 9, 10 | |
| X | US-A-4475726 (SMITH) * column 1, line 55 - column 6, line 32; figures 1-6 * | 1 | |
| A | | 2-4, 6, 7, 9, 10 | TECHNICAL FIELDS SEARCHED (Int. Cl.5 ) |
| A | SCHWEISSEN UND SCHNEIDEN. vol. 39, no. 4, April 1987, DUSSELDORF (DE) page A17 "Snell spannen und halten" * the whole document * | 1, 6, 8-10 | B23K B25B |

The present search report has been drawn up for all claims

| Place of search | Date of completion of the search | Examiner |
|---|---|---|
| THE HAGUE | 21 MARCH 1990 | HERBRETEAU D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)